Europäisches Patentamt

European Patent Office

Office européen des brevets

(19)

(11) Publication number: **0 038 587**
**A2**

(12) # EUROPEAN PATENT APPLICATION

(21) Application number: **81200367.1**

(22) Date of filing: **02.04.81**

(51) Int. Cl.³: **B 23 K 9/28**

(30) Priority: **18.04.80 IT 6760480**

(43) Date of publication of application:
**28.10.81 Bulletin 81/43**

(84) Designated Contracting States:
**AT BE CH DE FR GB LI LU NL SE**

(71) Applicant: **Cerutti, Mario**
**Via Asiago, 59/17**
**I-10142 Torino(IT)**

(71) Applicant: **Cordero, Luigi**
**Via Baracca, 7**
**I-10091 Alpignano (Torino)(IT)**

(71) Applicant: **Parpaiola, Pier Antonio**
**Via Garibaldi, 8**
**I-10091 Alpignano (Torino)(IT)**

(71) Applicant: **Parpaiola, Carlo**
**Via Garibaldi, 8**
**I-10091 Alpignano (Torino)(IT)**

(72) Inventor: **Cerutti, Mario**
**Via Asiago, 59/17**
**I-10142 Torino(IT)**

(72) Inventor: **Cordero, Luigi**
**Via Baracca, 7**
**I-10091 Alpignano (Torino)(IT)**

(72) Inventor: **Parpaiola, Pier Antonio**
**Via Garibaldi, 8**
**I-10091 Alpignano (Torino)(IT)**

(72) Inventor: **Parpaiola, Carlo**
**Via Garibaldi, 8**
**I-10091 Alpignano (Torino)(IT)**

(74) Representative: **Lotti, Giorgio c/o Ing. Barzano' &**
**Zanardo S.p.A.**
**Via Cernaia 20**
**I-10122 Torino(IT)**

(54) Method for constructing welding guns, and the relative product.

(57) A welding gun, mounted on machine tools, of the type constituted by two arms connected to an electricity supply, each arm being constituted by an electrode holder and an electrode connected together by a taper joint; the electrode holder and electrode of each arm are constituted by a pure copper core cast inside an amagnetic stainless steel shell; the method for constructing the arms follows the so-called lost-wax casting process, and one or more channels are formed inside the copper core for the passage of the gun cooling liquid.

EP 0 038 587 A2

# Method for constructing welding guns, and the relative product.

The invention relates to a method for constructing welding guns and the relative product.

Welding guns consist of variously shaped arms of different dimensions, constituted by an electrode holder and an electrode, and mounted on machine tools used for welding purposes.

The point which forms the electrode of each arm is fitted to the electrode holder by means of a taper joint. The electrode holder is provided internally with one or more concentric channels for circulating cooling water. Furthermore, as already stated, the electrode holder, and also the point or electrode, can assume various forms in relation to the degree of difficulty of access to the points to be welded (elbows, corners, undercuts etc.).

Usually, such guns, i.e. each arm formed by an electrode and electrode holder, are constructed of a homogeneous material in the form of a hard copper alloy. These can for example be copper-chromium, copper-nickel, copper-nickel-berrylium or other alloys.

In any case, in each of these alloys the percentage of copper present is very high in order to obtain the highest possible electrical conductivity. At the same time, the alloying materials (chromium, nickel, berrylium) improve the hardness and the mechanical characteristics of the gun.

In this respect, it is well known that pure copper has a very high electrical conductivity, but in contrast is extremely fragile so that if guns were to be constructed of pure copper they would fracture at the first welding attempt, because when such guns are closed on to the piece to be welded, they become considerably stressed mechanically, and only if the metal is sufficiently strong can welding be carried out for a considerable time before they have to be replaced. Thus by using an alloy of copper with certain sufficiently rigid materials, a conductivity is obtained in the order of 50% IACS at 20°C, this representing a relatively high conductivity, while at the same time reasonable mechanical characteristics are attained for the arms, which can thus operate for a reasonable time. Sometimes, in order to improve the mechanical characteristics, cores are constructed of copper with various alloying materials and covered by a clamped-on aluminium sleeve, so that the electrical conductivity and mechanical strength functions of the gun are assumed by the copper alloy core and aluminium sleeve respectively.

In other cases, the typical low conductivity of these copper alloy guns is increased by increasing the cross-section of each arm, which also leads to a good increase in the mechanical strength of the arm. The construction of this type of gun naturally depends mainly on the type of operation to be carried out, in that guns of this type are extremely bulky and thus unsuitable for insertion into narrow or tortuous positions in which welding is to be carried out.

In order to obviate all the aforesaid drawbacks of welding guns presently available, the present invention provides guns in which each arm is constituted by a pure electrolytic copper core which is cast into a stainless steel shell.

The method for constructing such a gun is extremely simple.

Castings for example of the lost-wax type are made from the two materials, namely pure copper and stainless steel. The steel shell is firstly constructed, and the pure copper is then cast into this and solidified. During the solidification of the two materials, these become alloyed together at least over a small surface layer thereof. During solidification, there is a continual process of heat transfer between the two materials, so that a more rapid solidification of the finished product is obtained, with the consequence that it cools more rapidly.

From tests carried out, it has been found that although pure copper is used in this construction, it has a mechanical strength, i.e. hardness, which is much better than the aforesaid copper alloys used at the present time. The aim of this method is to form a gun arm constituted by a single element which has high electrical conductivity and excellent mechanical characteristics. This is in fact attained, in that by fusing the two materials together, the one inside the other, these become bonded together in an irreversible manner to form a single body. Furthermore, each of them maintains the typical characteristics of the material, so that the external steel shell ensures the necessary mechanical strength to the arm, whereas the pure copper has a very high electrical conductivity.

A further very important advantage over welding guns of known type is attained by the method according to the invention, in that the connection cones between the electrode holder and electrode are constructed during the moulding operation, this directly producing the pure copper core.

Up to the present time, the cones have normally been of copper alloy or pure copper added on to the arms. In this respect, it is well known that however the electrode holder and electrode are constructed, their taper connection must have the maximum electrical conductivity possible, in that the greatest possible quantity of current from the electricity supply must reach the electrode through this connection. By means of this method, it is possible to make the joint between the arm and its support or the connection means between the two arms (for example threads) directly on the steel shell, which thus perfectly satisfies its high-strength requirements not only with regard to the gun during welding but also with regard to its connection to other members.

Using this method, it is possible to construct not only the electrode holder of the gun arm, but also the electrode itself, i.e. its end, by leaving the core uncovered only at the electrode point, The advantages in this case are even greater, because the electrode attains not only a high electrical conductivity but also high mechanical strength.

It has been indicated that the most advantageous method for constructing such guns is lost-wax casting, one reason being that any type of channeling can be formed inside the copper core for the passage of cooling water during welding.

By this means, the channels are formed directly in the copper, whereas at the present time nickel channels are embedded into the copper alloy core. It is therefore apparent that the welding gun according to the invention has economical production advantages (simple casting of two materials one inside the other), lower weight and smaller overall size (the high electrical conductivity and mechanical strength are easily obtained without constructing arms of large cross-section), and thus easier handling.

WHAT WE CLAIM IS

1. A welding gun of the type constituted by two arms connected to an electrical supply, each arm being constituted by an electrode holder and an electrode connected to each other by means of a taper joint, characterised in that at least the electrode holder of each arm is constituted by a pure copper core cast into an amagnetic stainless steel shell.

2. A welding gun as claimed in claim 1, characterised in that the electrode is also constituted by a pure copper core cast into an amagnetic stainless steel shell.

3. A welding gun as claimed in claims 1 and 2, characterised in that the mechanical connections between each arm and the members connected thereto are made on the steel shell.

4. A method for constructing welding guns as claimed in claims 1 and 2, characterised in that the amagnetic stainless steel shell is firstly formed, after which the pure copper is cast into it and on cooling becomes bonded to the inner walls of the shell.

5. A method as claimed in claim 4, characterised by using the lost-wax process, inside the core there being formed at least one channel for the passage of a cooling liquid for the gun.